# EUROPEAN PATENT SPECIFICATION

(11) **EP 4 187 241 B1**
(45) Date of publication and mention of the grant of the patent: **19.03.2025**
(21) Application number: 21847066.4
(22) Date of filing: 19.07.2021
(51) Int. Cl.: F15D 1/02, G01N 29/024, G01N 29/22, G01F 1/684, G01F 15/00, G01F 15/08, G01F 1/74

(54) **FLOW REGULATING STRUCTURE FOR GAS SENSOR**
STRÖMUNGSREGELUNGSSTRUKTUR FÜR GASSENSOR
STRUCTURE DE RÉGULATION DE DÉBIT POUR CAPTEUR DE GAZ

(30) Priority: 22.07.2020 JP 2020124942
(43) Date of publication of application: 31.05.2023
(73) Proprietor: Nisshinbo Holdings Inc., Tokyo 103-8650 (JP); Ueda Japan Radio Co., Ltd., Ueda-shi, Nagano 386-8608 (JP); Japan Radio Co., Ltd., Mitaka-shi, Tokyo 181-0002 (JP)
(72) Inventor: SEO, Daisuke, Ueda-shi, Nagano 386-8608 (JP); TAKIZAWA, Hiroyuki, Ueda-shi, Nagano 386-8608 (JP); TAKAHASHI, Hironobu, Ueda-shi, Nagano 386-8608 (JP); NIHEI, Ayumi, Ueda-shi, Nagano 386-8608 (JP); KONDA, Takashi, Tokyo 103-8650 (JP)
(74) Representative: Wunderlich & Heim Patentanwälte PartG mbB
(86) International application number: PCT/JP2021/027002
(87) International publication number: WO 2022/019276

(56) References cited:
- JP-A- 2001 208 577
- JP-A- 2001 208 577
- JP-A- 2005 024 080
- JP-A- 2011 508 193
- JP-A- 2014 106 225
- JP-A- 2015 224 872
- JP-A- 2020 106 299
- SU-A1- 1 373 971
- US-A- 3 870 082
- US-A1- 2004 261 519
- US-A1- 2015 136 027
- US-A1- 2019 234 356
- US-B2- 8 443 842

## Description

### TECHNICAL FIELD

The present invention relates to a flow regulating structure for a gas sensor, and in particular, a flow regulating structure including a rail structure.

### BACKGROUND

Research and development work has been widely carried out on fuel cell vehicles which are driven to travel by electric power supplied from fuel cells. The fuel cells generate electric power by means of a chemical reaction between hydrogen and oxygen. In general, hydrogen is supplied as a fuel for the fuel cells, while oxygen is taken from ambient air into the fuel cells. The fuel cell vehicles are equipped with a hydrogen tank from which hydrogen is supplied to the fuel cells. When an amount of hydrogen in the hydrogen tank is decreased, hydrogen is supplied to the hydrogen tank in the fuel cell vehicle from a hydrogen supplying device installed in a service station.

Because hydrogen is a flammable gas, it is necessary for any leakage of hydrogen to be monitored when the fuel cell is utilized. In this respect, hydrogen sensors have been commonly used along with the fuel cells. The hydrogen sensors have functions of measuring a concentration of hydrogen contained in air and issuing an alarm when the concentration of hydrogen exceeds a predetermined value.

As technology related to the invention of this application, below-listed Patent Documents 1 and 2 describe flow regulating structures used in fuel cells. The flow regulating structures described in the Patent Documents regulate a gas to be supplied into the fuel cell, to accelerate reaction between hydrogen and oxygen. The flow regulating structure described in Patent Document 1 employs an air distributing plate as a member for regulating a gas. The air distributing plate is a flat plate in which a plurality of circular through holes are evenly formed. The flow regulating structure described in Patent Document 2 employs, as a member for regulating a gas, an air distributing plate designed to cause a pressure drop of the gas that is to be regulated.

JP2001208577 A, US8443842 B2 provide further examples of flow regulating structures for gas sensors.

### CITATION LIST

### PATENT LITERATURE

Patent Document 1: JP H09-92311 A
Patent Document 2: JP 2006-183977 A

### SUMMARY

### TECHNICAL PROBLEM

There are some gas sensors, such as hydrogen sensors, that measure a concentration of a particular gas based on a propagation velocity of an ultrasonic wave. Such gas sensors are provided with a space in which the concentration of the gas is measured (concentration measuring space). Ultrasonic transducers for transmitting and receiving the ultrasonic wave are disposed in the concentration measuring space. The propagation velocity of the ultrasonic wave is detected based on a predetermined propagation distance and a propagation time elapsed from transmission of the ultrasonic wave from an ultrasonic transmission transducer until the ultrasonic wave having propagated through the concentration measurement space is received in an ultrasonic reception transducer.

In the gas sensor which obtains the propagation velocity of the ultrasonic wave, when a flow velocity or a flow direction of a gas flowing into the concentration measuring space becomes unstable due to a turbulent flow or a vortex flow, for example, a measurement accuracy of the propagation time of the ultrasonic wave having propagated through the concentration measuring space may be decreased, and a measurement accuracy of a concentration of the gas may be accordingly decreased. To prevent this, it is conceivable that a flow regulating structure may be used for regulating the gas which is to be introduced into the gas sensor. However, when the flow regulating structures as described in Patent Documents 1 and 2 are used, because pressure losses are great, it is considered that exchange of the gas in the concentration measuring space may be slowed down, resulting in delay in timing of obtaining an appropriate measurement result. Further, when such flow regulating structures are used, it is also considered that moisture contained in a gas to be measured may be dew-condensed in the flow regulating structure, to thereby hamper a measurement.

An object of the present invention is to implement a flow regulating structure capable of improving performance of a gas sensor.

### SOLUTION TO PROBLEM

The present invention is characterized in that a plurality of rail structures, each of which includes a plurality of rod-shaped members which are arranged with their elongation directions being aligned with each other, are installed, that the plurality of rail structures are stacked so as to be spaced from each other along a gas flow direction, and that the elongation directions of the rod-shaped members differ between mutually adj acent rail structures among the plurality of rail structures.

Preferably, in each of the rail structures, the plurality of rod-shaped members may be arranged in each of a first virtual plane and a second virtual plane with the elongation directions being aligned with each other, the first virtual plane opposing the second virtual plane in the gas flow direction, and when viewed toward the gas flow direction, each of the rod-shaped members arranged in the second virtual plane is located between mutually adjacent rod-shaped members among the rod-shaped members arranged in the first virtual plane.

Preferably, each of the rod-shaped members has an edge extending along the elongation direction, and the edge of each of the rod-shaped members points outside the rail structure.

Preferably, each of the rail structures has an annular frame member, and the rod-shaped members in each of the rail structures are placed so as to form bridges across an inner area of the frame member.

### ADVANTAGEOUS EFFECTS OF INVENTION

According to the present invention, the flow regulating structure capable of improving performance of the gas sensor can be implemented.

### BRIEF DESCRIPTION OF DRAWINGS

FIG. 1 is a diagram showing a configuration of a fuel cell system.
FIG. 2 is a cross-sectional perspective view of a gas-liquid separator.
FIG. 3 is a cross-sectional perspective view of a flow regulating structure.
FIG. 4A is a diagram showing a rail structure.
FIG. 4B is a diagram showing the rail structure.
FIG. 5A is a diagram showing a rail structure according to a first modification example.
FIG. 5B is a diagram showing the rail structure according to the first modification example.
FIG. 6A is a diagram showing a rail structure according to a second modification example.
FIG. 6B is a diagram showing the rail structure according to the second modification example.
FIG. 7A is a diagram showing a rail structure according to a third modification example.
FIG. 7B is a diagram showing the rail structure according to the third modification example.

### DESCRIPTION OF EMBODIMENTS

A fuel cell system and a gas-liquid separator according to an embodiment of this invention will be described with reference to the drawings. Identical components illustrated in a plurality of diagrams are designated by identical reference numerals, and descriptions related to these components will be simplified. Further, as used herein, terms representing shapes, such as a "column", a "cylinder", or a "circle", denote not only precisely defined geometrical shapes but also deformed forms of the geometrical shapes that are deformed within a range in which components having the deformed forms can exercise intended functions of the components.

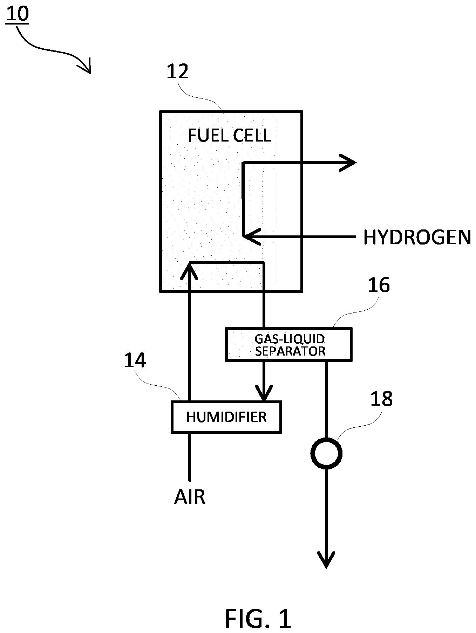

FIG. 1 shows a configuration of a fuel cell system 10 according to an embodiment of the present invention. The fuel cell system 10 includes a fuel cell 12, a humidifier 14, a gas-liquid separator 16, and a hydrogen sensor 18. The fuel cell 12 is supplied with air including oxygen. That is, the air is introduced into the humidifier 14 and appropriately moisturized in the humidifier 14. The air moisturized by the humidifier 14 is supplied to the fuel cell 12. In addition to the air, hydrogen is separately supplied as a fuel to the fuel cell 12.

The fuel cell 12 produces electric power by means of a chemical reaction between hydrogen and oxygen. Water created through the chemical reaction between hydrogen and oxygen is introduced from the fuel cell 12 into the gas-liquid separator 16 along with the air. The gas-liquid separator 16 separates moisture from the air, and directs the separated moisture to the humidifier 14. The gas-liquid separator 16 discharges the air from which moisture has been removed. For the air discharged from the gas-liquid separator 16, the hydrogen sensor 18 detects a concentration of hydrogen in the air.

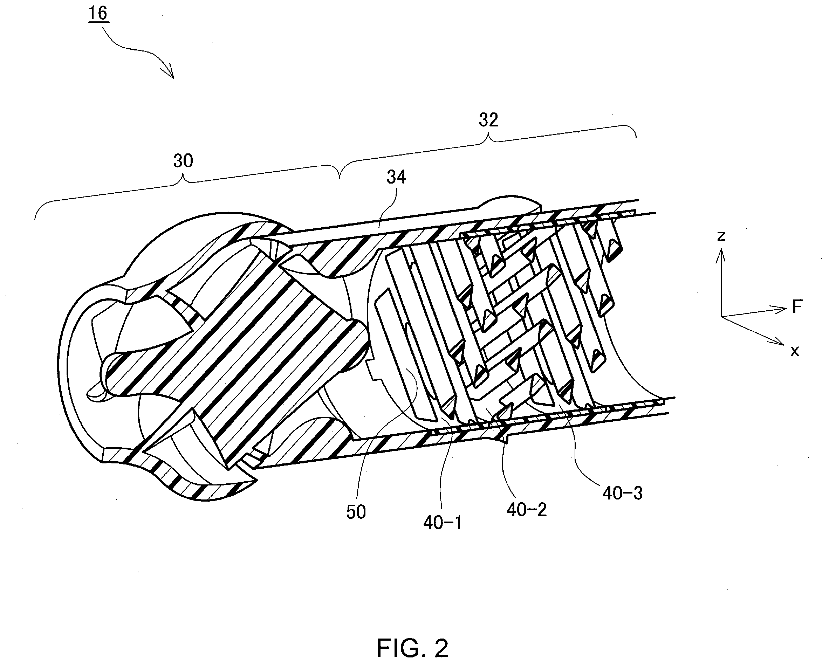

FIG. 2 shows a cross-sectional perspective view of the gas-liquid separator 16. The gas-liquid separator 16 is formed in a columnar shape. FIG. 2 shows a flow axis F which is located on a center axis of the gas-liquid separator 16 and oriented to point in a direction of air flow through the gas-liquid separator 16. FIG. 2 further shows an x axis whose rightward direction viewed toward a positive direction of the flow axis F is defined as a positive direction, and a z axis whose upward direction is defined as a positive direction.

The gas-liquid separator 16 is equipped with a gas-liquid separating structure 30 and a flow regulating structure 32. The gas-liquid separating structure 30 separates moisture from air that has flowed into the gas-liquid separating structure 30 from its upstream side and discharges the moisture out of the gas-liquid separating structure 30. The air from which moisture has been separated is made to flow into the flow regulating structure 32. The flow regulating structure 32 regulates a flow direction of the air having passed through the gas-liquid separating structure 30.

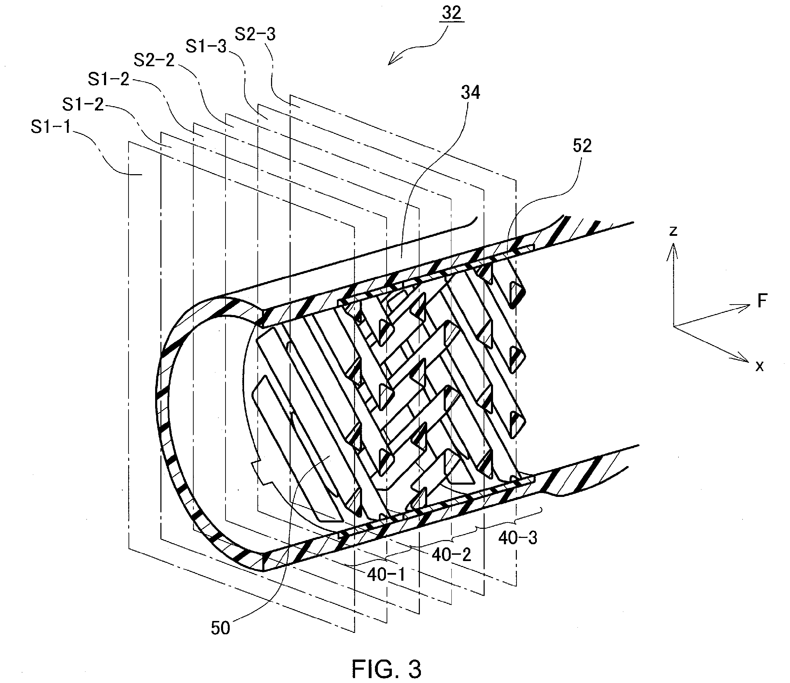

FIG. 3 shows a cross-sectional perspective view of the flow regulating structure 32. The flow regulating structure 32 includes a cylindrical housing 34 and three rail structures 40-1 to 40-3. The three rail structures 40-1 to 40-3 are stacked so as to be spaced from each other along a direction of the flow axis F, i.e., along a gas flow direction. Each of the rail structures includes a plurality of bar-shaped members 50 which are arranged with their elongation directions being aligned with each other. In each of the rail structures, two virtual planes opposed to each other in the gas flow direction are defined. Specifically, a first virtual plane S1-1 and a second virtual plane S2-1 are defined in the rail structure 40-1. A first virtual plane S1-2 and a second virtual plane S2-2 are defined in the rail structure 40-2. A first virtual plane S1-3 and a second virtual plane S2-3 are defined in the rail structure 40-3.

Each of the rail structures according to this embodiment includes the rod-shaped members 50 arranged parallel with each other in each of the first virtual plane and the second virtual plane. Each of the rail structures further includes a cylindrical frame member 52 in which the rod-shaped members 50 are arranged, in each of the first and second virtual panes, so as to form bridges within the frame member 52, i.e., form bridges across an inner surface of the frame member 52.

As shown in FIG. 3, rod-shaped members 50 contained in the rail structure 40-1 extend along a direction slanting downward to the right at an angle of 45 degrees relative to the x axis. Meanwhile, rod-shaped members 50 contained in the rail structure 40-2 extend along a direction slanting upward to the right at an angle of 45 degrees relative to the x axis. Further, rod-shaped members 50 contained in the rail structure 40-3 extend along the direction slanting downward to the right at the angle of 45 degrees relative to the x direction. In this way, the rod-shaped members 50 have different elongation directions between mutually adjacent rail structures. Specifically, the elongation directions of the rod-shaped members 50 contained in the rail structure 40-1 differ by 90 degrees from the elongation directions of the rod-shaped members 50 contained in the rail structure 40-2. In addition, the elongation directions of the rod-shaped members 50 contained in the rail structure 40-2 differ by 90 degrees from the elongation directions of the rod-shaped members 50 contained in the rail structure 40-3.

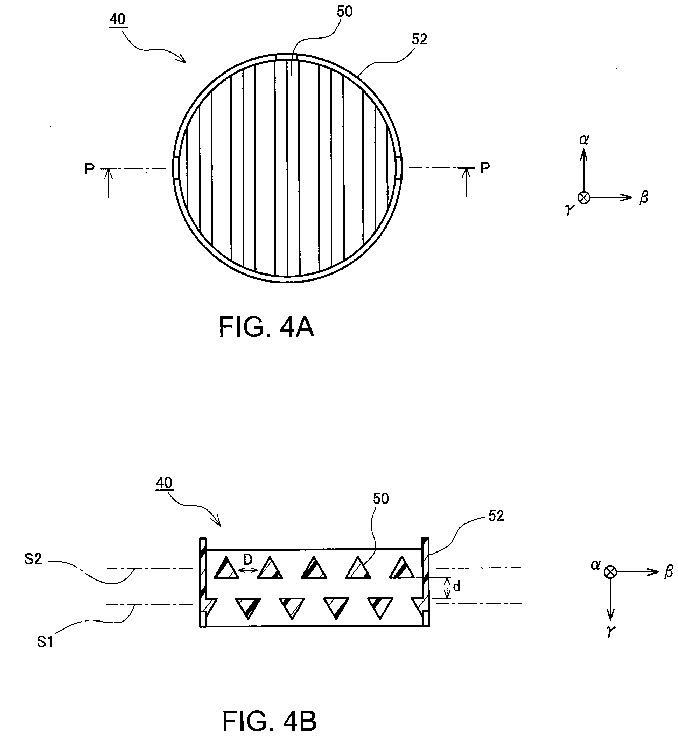

FIG. 4A shows a front view of one of the rail structures 40 viewed in the positive direction of the flow axis F. In the following description, reference numeral "40" may be used as a comprehensive reference sign for globally representing the rail structures 40-1 to 40-3 as appropriate. FIG. 4B shows a cross section of the rail structure 40 which is visible when the rail structure 40 is cut along line PP indicated in FIG. 4A. In FIGs. 4A and 4B, a coordinate axis whose positive direction is in an upward direction of FIG. 4A is defined as an α axis. Further, a coordinate axis whose positive direction is in a rightward direction of FIG. 4A is defined as a β axis. Still further, a coordinate axis whose positive direction is in a direction vertically approaching the drawing surface on which FIG. 4A is drawn is defined as a γ axis. The γ axis is parallel to the above-described flow axis F.

As shown in FIG. 4B, each of the rod-shaped members has a shape of a triangular prism. The first virtual plane S1 coincides with the centroids of triangles formed by the cross sections of four rod-shaped members 50 excluding rod-shaped members 50 disposed at both margins. The marginal rod-shaped members 50 in the first virtual plane S1 have a shape of a triangular prism being cut by the inner surface of the frame member 52. The marginal rod-shaped members 50 are placed in such a manner that the centroids of imaginary cross sections of the marginal rod-shaped members 50 are located in the first virtual plane S1, the imaginary cross sections being drawn by assuming that the marginal rod-shaped members 50 were not cut by the inner surface of the frame member 52. The second virtual plane S2 coincides with the centroids of triangles formed by the cross sections of five rod-shaped members 50. In the example shown in FIGs. 4A and 4B, the rod-shaped members 50 are evenly spaced in each of the first virtual plane S1 and the second virtual plane S2, and each of the rod-shaped members 50 forms a bridge across the inner surface of the frame member 52.

One of the three vertices of each of the triangles formed by the cross sections of the rod-shaped members 50 is oriented to point outside the rail structure 40. In other words, each of the rod-shaped members 50 arranged in the first virtual plane S1 has one edge pointing in a direction opposite to the second virtual plane S2 (outward direction), while each of the rod-shaped members 50 arranged in the second virtual plane S2 has one edge pointing in a direction opposite to the first virtual plane S1 (outward direction).

The rod-shaped members 50 arranged in the first virtual plane S1 are separated by a distance d from the rod-shaped members 50 arranged in the second virtual plane S2. The distance d is defined as a width, along a γ axis direction, of a gap which is recognized between the rod-shaped members 50 disposed in the first virtual plane S1 and the rod-shaped members 50 disposed in the second virtual plane S2 when viewed in a β axis direction. The distance d may be equal to or greater than a gap D between mutually adjacent rod-shaped members 50 disposed in the first virtual plane S1, or a gap D between mutually adjacent rod-shaped members 50 disposed in the first virtual plane S2.

As shown in FIG. 4A, when viewed in the gas flow direction, the rod-shaped members 50 disposed in the second virtual plane S2 are positioned between mutually adjacent rod-shaped members 50 among the rod-shaped members 50 disposed in the first virtual plane S1 in the rail structure 40. Similarly, when viewed in the gas flow direction, the rod-shaped members 50 disposed in the first virtual plane S1 are positioned between mutually adjacent rod-shaped members 50 among the rod-shaped members 50 disposed in the second virtual plane S2. In the example shown in FIG. 4A, when viewed in the gas flow direction, because each space between mutually adjacent rod-shaped members 50 among the six rod-shaped members 50 disposed in the first virtual plane S1 is closed by a corresponding one of the rod-shaped members 50 disposed in the second virtual plane S2, it is not possible to get an unobstructed view from upstream to downstream.

In the flow regulating structure 32 shown in FIG. 3, the three rail structures 40-1 to 40-3 are employed. The three rail structures are stacked so as to be spaced from each other along the gas flow direction and fixed to the inside of the cylindrical housing 34 in such a manner that the rod-shaped members 50 extend at an angle of 90 degrees relative to rod-shaped members 50 in the adjacent rail structure.

In the flow regulating structure 32 according to this embodiment, the plurality of rail structures 40 are stacked so as to be spaced from each other along the gas flow direction, and the rod-shaped members 50 have elongation directions that are different from those in the adjacent rail structure 40. In this way, even in the event of occurrence of turbulence in air flowing into the flow regulating structure 32, the flow direction of the air is adjusted to become close to the direction of the flow axis F, or to match thereto. For example, in a case where a structure for creating a swirl of air by means of a fin (such as a vane shaped structure) in order to separate moisture from the air using centrifugal force is employed as the gas-liquid separator 30 shown in FIG. 2, the air directed through the gas-liquid separator 30 may become turbulent. Even in such a case, a flow of the air is adjusted to be close to the direction of the flow axis F, or to match thereto.

Further, in the flow regulating structure 32 according to this embodiment, the rod-shaped members 50 contained in the same one rail structure 40 are arranged with their elongation directions being aligned with each other. Accordingly, a slit like gap is formed between mutually adjacent rod-shaped members 50. In addition, a sufficient space is secured between the rod-shaped members 50 disposed in the first virtual plane S1 and the rod-shaped members 50 disposed in the second virtual plane S2. In this way, a pressure loss can be minimized even though the plurality of rail structures 40 are arranged in series along the gas flow direction.

Still further, in the flow regulating structure 32, the edge extending along the elongation direction in each of the rod-shaped members 50 disposed in the first virtual plane S1 is oriented to point outward, while the edge extending along the elongation direction in each of the rod-shaped members 50 disposed in the second virtual plane S2 is oriented to point outward. This can also help minimize the pressure loss in the flow regulating structure 32.

Therefore, when the hydrogen sensor is used for the air that has passed through the flow regulating structure 32 according to the present embodiment, the measurement accuracy of the hydrogen sensor is improved.

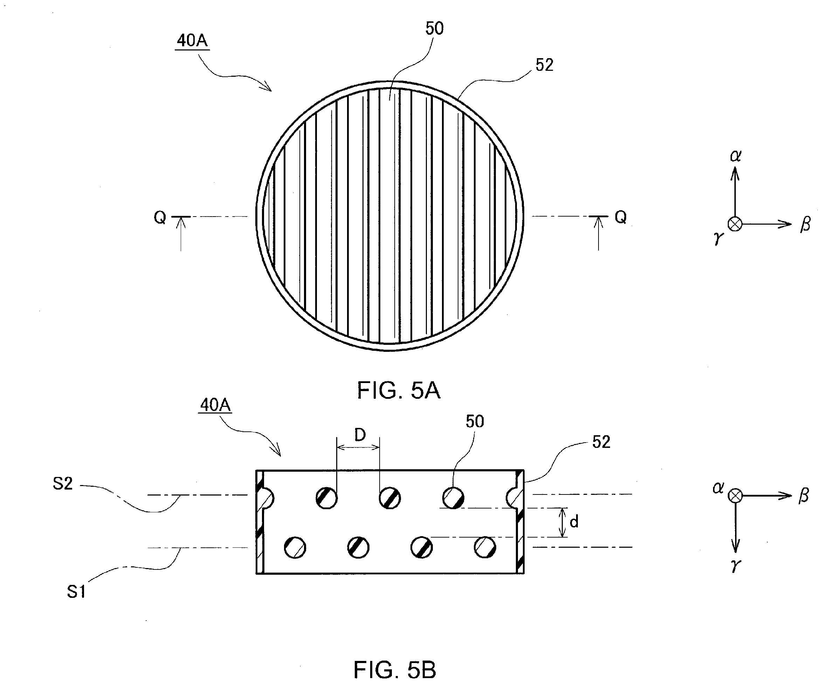

FIGs. 5A and 5B show a rail structure 40A according to a first modification example. FIG. 5B shows a cross section of the rail structure 40A which is visible when the rail structure 40A is cut along line QQ indicated in FIG. 5A. As shown in FIG. 5B, each rod-shaped member 50 has the shape of a circular column, except for the rod-shaped members 50 disposed at both margins in the second virtual plane S2. The marginal rod-shaped members 50 in the second virtual plane S2 have the shape of a circular column being cut by the inner surface of the frame member 52. The first virtual plane S1 coincides with the centroids of cross sections of four rod-shaped members 50. The second virtual plane S2 coincides with the centroids of cross sections of three rod-shaped members 50 other than the marginal rod-shaped members 50. The marginal rod-shaped members 50 are placed in such a manner that the centroids of imaginary cross sections of the marginal rod-shaped members 50 are located in the second virtual plane S2, the imaginary cross sections being drawn by assuming that the marginal rod-shaped members 50 were not cut by the inner surface of the fame member 52. In the example shown in FIGs. 5A and 5B, the rod-shaped members 50 are evenly spaced in each of the first virtual plane S1 and the second virtual plane S2, and each of the rod-shaped members 50 forms a bridge across the inner surface of the frame member 52.

The distance d between the rod-shaped members 50 disposed in the first virtual plane S1 and the rod-shaped members 50 disposed in the second virtual plane S2 may be equal to or greater than the gap D between mutually adjacent rod-shaped members 50 disposed in the first virtual plane S1. Alternatively, the distance d may be equal to or greater than the gap D between mutually adjacent rod-shaped members 50 disposed in the second virtual plane S2. The distance d and the interval D in other modification examples described below may have a relationship similar to this modification example.

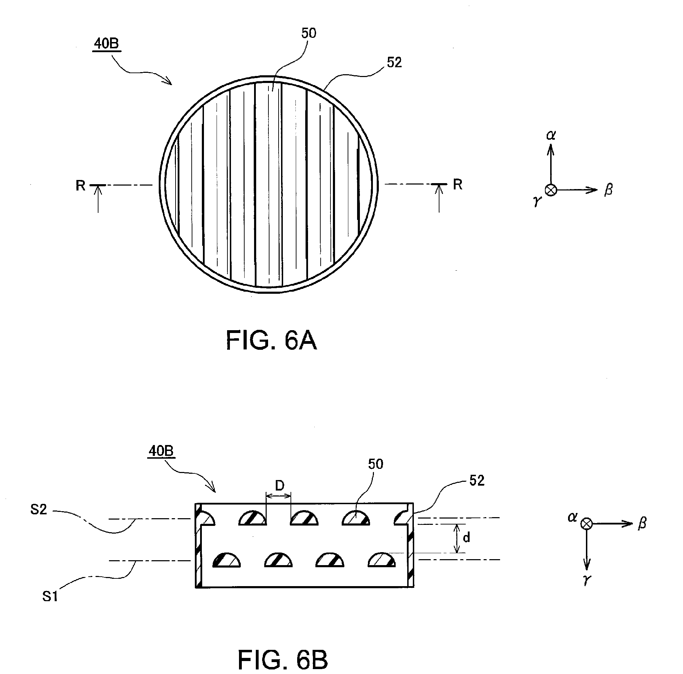

FIGs. 6A and 6B show a rail structure 40B according to a second modification example. FIG. 6B shows a cross section which is visible when the rail structure 40 B is cut along line RR indicated in FIG. 6A. As shown in FIG. 6B, each rod-shaped member 50 other than rod-shaped members located at margins in the second virtual plane S2 has the shape of a semicircular column formed by cutting a circular column by a plane parallel to an α-β plane. The marginal rod-shaped members 50 located in the second virtual plane S2 have the shape of a semicircular column being cut at the inner surface of the frame member 52. Each of the rod-shaped members 50 has a curved surface protruding toward a negative direction of the γ axis. The centroids of cross sections of four rod-shaped members 50 are located in the first virtual plane S1. The centroids of cross sections of three rod-shaped members 50 other than the marginal rod-shaped members 50 are located in the second virtual plane S2. The marginal rod-shaped members 50 are disposed in such a manner that the centroids of imaginary cross sections of the marginal rod-shaped members 50 are located in the second virtual plane S2, the imaginary cross sections being drown by assuming that the marginal rod-shaped members 50 were not cut by the inner surface of the frame member 52. In the example shown in FIGs. 6A and 6B, the rod-shaped members 50 are evenly spaced in each of the first virtual plane S1 and the second virtual plane S2, and each of the rod-shaped members 50 forms a bridge across the inner surface of the frame member 52.

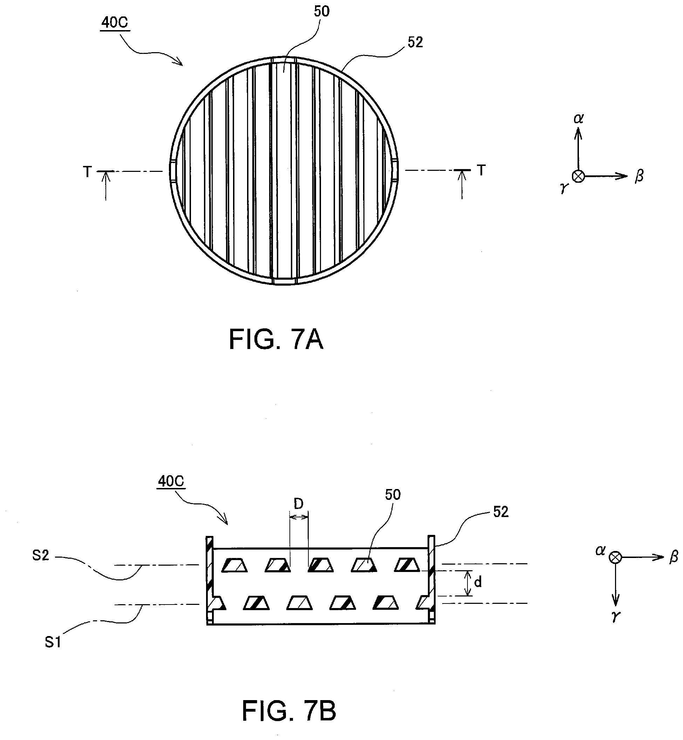

FIGs. 7A and 7B show a rail structure 40C according to a third modification example. FIG. 7B shows a cross section of the rail structure 40C that is visible when the rail structure 40C is cut along line TT indicated in FIG. 7A. As shown in FIG. 7B, the rod-shaped members 50 other than marginal rod-shaped members 50 in the first vertical plane S1 have the shape of a trapezoidal column which is trapezoidal in cross section taken along a direction vertical to the elongation direction. The marginal rod-shaped members 50 in the first virtual plane S1 have the shape of a trapezoidal column being cut by the inner surface of the frame member 52. In each of the rod-shaped members 50, a shorter side of the trapezoid in cross section is located on a negative direction side of the γ axis. The centroids of four rod-shaped members 50 other than the marginal rod-shaped members 50 are located in the first virtual plane S1. The marginal rod-shaped members 50 are placed in such a manner that the centroids of imaginary cross sections of the marginal rod-shaped members 50 are located in the first virtual plane S1, the imaginary cross sections being drawn by assuming that the marginal rod-shaped members 50 were not cut by the inner surface of the frame member 52. The centroids of cross sections of five rod-shaped members 50 are located in the second virtual plane S2. In the example shown in FIGs. 7A and 7B, the rod-shaped members 50 are evenly spaced in each of the first virtual plane S1 and the second virtual plane S2, and each of the rod-shaped members 50 forms a bridge across the inner surface of the frame member 52.

The above-described structure in which the rod-shaped members 50 form the bridges across the inner surface of the frame member 52 without contacting each other provides an effect described below. That is, even though moisture contained in air is dew-condensed, a water droplet created by the condensed moisture will reach the inner surface of the frame member 52 while moving on the surface of the rod-shaped member 50. The frame member 52 may be designed to cause the water droplet to be drained while moving along the flow axis F at the lowest position of the inner surface. In this way, an amount of water droplets stagnating in a gap between mutually adjacent rod-shaped members 50 is reduced, or no water droplets stagnate in the gap between the mutually adjacent rod-shaped members 50. Therefore, a phenomenon in which the water droplet hinders the flow of air through the gap between the mutually adjacent rod-shaped members 50 can be suppressed.

Further, because of the formation of the plurality of rail structures stacked so as to be spaced from each other, the rod-shaped members 50 in one of mutually adjacent rail structures are not brought into contact with the rod-shaped members 50 in the other of the mutually adjacent rail structures. Therefore, on a similar basis as described above, occurrence of the phenomenon in which the water droplet hinders the flow of air through the plurality of rail structures can be reduced. That is, even in the unlikely event that moisture contained in the air is dew-condensed on the surface of a rod-shaped member 50, the water droplet formed by the condensed moisture is directed to reach the inner surface of the frame member 52 while moving along the surface of the rod-shaped member 50. This can reduce the amount of water droplets stagnating in the gap between the rod-shaped member 50 in one of the mutually adjacent rail structures and the rod-shaped member 50 in the other of the mutually adjacent rail structures, or prevent stagnation of water droplets in the gap. As a result, the phenomenon in which the flow of air passing through the plurality of rail structures is blocked by the water droplet can be prevented.

The above description presents the flow regulating structure 32 in which the first virtual plane S1 and the second virtual plane S2 are defined in one rail structure 40, and the plurality of rod-shaped members 50 are arranged in each of the first virtual plane S1 and the second virtual plane S2 so as to have the elongation directions being aligned with each other. Other than such a double layered structure in which the plurality of rod-shaped members are disposed in each of two virtual planes opposing each other in the gas flow direction, the flow regulating structure may be formed as a single layer structure. In this case, a single virtual plane is defined in one rail structure, and the plurality of rod-shaped members are arranged in the single virtual plane so as to have the elongation directions being aligned with each other.

Further, the plurality of rod-shaped members contained in one rail structure need not necessarily be located in any virtual plane and may be variously shifted forward or rearward of the virtual plane in the gas flow direction and located so as to have the elongation directions being aligned with each other.

Still further, the rail structure may be formed as an N-layered structure in which a plurality of rod-shaped members are arranged in each of three or more virtual planes, which are defined to be spaced at a predetermined interval in the gas flow direction and have normal directions aligned with each other, so as to have the elongation directions being aligned with each other, where N is an integer equal to or greater than three.

Moreover, the above description presents the flow regulating structure 32 in which the three rail structures 40 are stacked with a space intervening therebetween in the gas flow direction in such a manner that that the rod-shaped members 50 in each of the rail structures 40 are disposed at an angle of 90 degrees relative to rod-shaped members 50 in the adjacent rail structure 40. The number of rail structures contained in the flow regulating structure may be arbitrarily defined, and two rail structures or four or more rail structures may be employed in the flow regulating structure. In addition, the angle formed by the rod-shaped members in mutually adjacent rail structures may be of any extent other than 0 degrees. For example, when M rail structures are stacked so as to be spaced from each other along the gas flow direction, the angle formed by the rod-shaped members in mutually adjacent rail structures may be an angle of [180° / (M - 1)].

In addition, the number of rod-shaped members in the rail structure may be arbitrarily defined. The rod-shaped members in the rail structure need not necessarily be arranged at equal intervals. Further, when three or more rail structures are utilized in the flow regulating structure, placement intervals of the rail structures need not necessarily be equal intervals. The housing may have any tubular shape other than the cylindrical shape. The frame member in the rail structure may have any tubular shape which can be fitted in an inner wall of the housing.

The flow regulating structure according to the present invention may be used not only for the hydrogen sensor but also for any sensors for detecting gases other than hydrogen. In other words, the flow regulating structure according to the present invention may be used for regulating air, which can be an object to be detected by general gas sensors.

### REFERENCE SIGN LIST

10 fuel cell system; 12 fuel cell; 14 humidifier; 16 gas-liquid separator; 18 hydrogen sensor; 30 gas-liquid separating structure; 32 flow regulating structure; 34 housing; 40, 40-1, 40-2, 40-3, 40A, 40B, 40C rail structure; 50 rod-shaped member; 52 frame member; S1, S1-1 ~ S1-3 first virtual plane; S2, S2-1 ~ S2-3 second virtual plane.

## Claims

1. A flow regulating structure for a gas sensor, comprising:
a plurality of rail structures (40-1, 40-2, 40-3), each of the rail structures comprising a plurality of rod-shaped members (50) which are arranged so as to have elongation directions being aligned to each other, **characterized in that**
the plurality of rail structures are stacked so as to be spaced from each other along a gas flow direction, and
the elongation directions of the rod-shaped members differ between mutually adjacent rail structures among the plurality of rail structures.

2. The flow regulating structure for a gas sensor according to Claim 1, wherein:
in each of the plurality of rail structures, the plurality of rod-shaped members are arranged so as to have the elongation directions being aligned with each other in each of a first virtual plane and a second virtual plane which are opposed to each other in the gas flow direction, and
when viewed in the gas flow direction, the rod-shaped members disposed in the second virtual plane are located between mutually adjacent rod-shaped members in the plurality of rod-shaped members disposed in the first virtual plane.

3. The flow regulating structure for a gas sensor according to Claim 2, wherein:
each of the rod-shaped members has an edge extending along the elongation direction; and
the edge of each of the rod-shaped members points outside the rail structure.

4. The flow regulating structure for a gas sensor according to any one of Claims 1 to 3, wherein:
each of the plurality of rail structures has an annular frame member (52), and
the plurality of rod-shaped members in each of the plurality of rail structures are arranged so as to form bridges across an inner area of the frame member.

## Patentansprüche

1. Strömungsregulierungsstruktur für einen Gassensor, die aufweist:
eine Vielzahl von Führungsstrukturen (40-1, 40-2, 40-3), wobei jede der Führungsstrukturen eine Vielzahl von stabförmigen Teilen (50) aufweist, die so angeordnet sind, dass sie Erstreckungsrichtungen haben, die zueinander ausgerichtet sind, **dadurch gekennzeichnet, dass**
die Vielzahl von Führungsstrukturen so gestapelt ist, dass sie entlang einer Gasströmungsrichtung voneinander beabstandet sind und
die Erstreckungsrichtungen der stabförmigen Teile sich zwischen gegenseitig benachbarten Führungsstrukturen unter der Vielzahl von Führungsstrukturen unterscheiden.

2. Strömungsregulierungsstruktur für einen Gassensor nach Anspruch 1, wobei:
in jeder der Vielzahl von Führungsstrukturen die Vielzahl von stabförmigen Teilen so angeordnet sind, dass die Erstreckungsrichtungen miteinander in jeweils einer ersten virtuellen Ebene und einer zweiten virtuellen Ebene ausgerichtet sind, die zueinander im Gasstromrichtung gegenüberliegend sind und,
sich, in Gasströmungsrichtung gesehen, die stabförmigen Teile befinden, die in der zweiten virtuellen Ebene zwischen gegenseitig benachbarten stabförmigen Teilen in der Vielzahl von stabförmigen Teilen angeordneten sind, die in der ersten virtuellen Ebene angeordnet sind.

3. Strömungsregulierungsstruktur für einen Gassensor nach Anspruch 2, wobei:
jedes der stabförmigen Teile eine Kante aufweist, die sich entlang der Erstreckungsrichtung erstreckt; und
die Kante jedes der stabförmigen Teile nach außen der Führungsstruktur zeigt.

4. Strömungsregulierungsstruktur für einen Gassensor nach einem der Ansprüche 1 bis 3, wobei:
jede der Vielzahl von Führungsstrukturen ein ringförmiges Rahmenteil (52) aufweist, und
die Vielzahl von stabförmigen Teilen in jeder der Vielzahl von Führungsstrukturen so angeordnet sind, um Brücken über einen inneren Bereich des Rahmenteils zu bilden.

## Revendications

1. Structure de régulation de débit pour un capteur de gaz, comprenant :
une pluralité de structures de rail (40-1, 40-2, 40-3), chacune des structures de rail comprenant une pluralité d'éléments en forme de tige (50), qui sont disposés de manière à présenter des directions d'allongement qui sont alignées les unes par rapport aux autres, **caractérisée en ce que**
la pluralité de structures de rail sont empilées de manière à être espacées les unes des autres le long d'une direction d'écoulement de gaz, et
les directions d'allongement des éléments en forme de tige diffèrent entre des structures de rail mutuellement adjacentes parmi la pluralité de structures de rail.

2. Structure de régulation de débit pour un capteur de gaz selon la revendication 1, dans laquelle :
dans chacune de la pluralité de structures de rail, la pluralité d'éléments en forme de tige sont disposés de manière à présenter les directions d'allongement qui sont alignées les unes avec les autres dans chacun d'un premier plan virtuel et d'un deuxième plan virtuel qui sont opposés l'un à l'autre dans la direction d'écoulement de gaz, et
vus dans la direction d'écoulement de gaz, les éléments en forme de tige disposés dans le deuxième plan virtuel sont situés entre des éléments en forme de tige mutuellement adjacents de la pluralité d'éléments en forme de tige disposés dans le premier plan virtuel.

3. Structure de régulation de débit pour un capteur de gaz selon la revendication 2, dans laquelle :
chacun des éléments en forme de tige présente un bord s'étendant le long de la direction d'allongement ; et
le bord de chacun des éléments en forme de tige est orienté vers l'extérieur de la structure de rail.

4. Structure de régulation de débit pour un capteur de gaz selon l'une quelconque des revendications 1 à 3, dans laquelle :
chacune de la pluralité de structures de rail présente un élément de cadre annulaire (52), et
la pluralité d'éléments en forme de tige dans chacune de la pluralité de structures de rail sont disposés de manière à former des ponts à travers une zone intérieure de l'élément de cadre.
